# EUROPEAN PATENT APPLICATION

(11) **EP 0 661 489 A1**
(43) Date of publication of application: **05.07.1995**
(21) Application number: 94120720.1
(22) Date of filing: 27.12.1994
(51) Int. Cl.: F16L 33/00, F16L 37/084

(54) **Strengthening member for a deformable tubular body**

(30) Priority: 28.12.1993 IT TO930284 U
(71) Applicant: DAYCO EUROPE S.p.A., I-10123 Torino (IT)
(72) Inventor: Fiorio, Luigino, I-10015 Ivrea (IT)
(74) Representative: Jorio, Paolo

(57) **Abstract**

A strengthening member (1) provided with a hollow shaft (13), capable of being inserted into an end portion (2) of a deformable tubular body (3), with at least one projection (20), to engage shaft (13) with end portion (2), and with a cylindric head (15), capable of abutting against a front end surface (17) of end portion (2), and having a rounded off edge (18), opposite to that adjacent to shaft (13).

## Description

The present invention relates to a strengthening member for a deformable tubular body.

In particular, the present invention may be used advantageously to connect flexible pipes, in general, and deformable pipes made of plastic material, in particular.

In general, the known systems employed to connect two deformable pipes, made of plastic material, make use of Victaulic coupling comprising, for each pipe to be connected, one seal ring made of elastomeric material, and a plurality of retention members, which, in operation, extend annularly with respect to an end portion of the relevant pipe, and engage an end section of said end portion with the relevant seal ring. In particular, steady cooperation in a sealed manner between end portion and ring is ensured by exercising, in response to a stress acting in an axial direction and tending to uncouple the pipe from its relevant seal ring, a radial compression on said end portion. Such a compressive stress being so high, in some cases, as to cause deformation of end portion and, consequently, to affect seal by seal ring.

Moreover, further to the ordinary forming processes, the axial ends of said pipes are delimited by normally cutting edges, which, during coupling of pipe and relevant seal ring, may cut into the side surface of the ring, thus causing its sealing characteristics to be altered.

The object of the present invention is to furnish a strengthening member that may overcome the aforementioned drawbacks in an easy and economical manner.

Such an issue is solved by the strengthening member for a deformable tubular body as according to the present invention; said member being capable of cooperating with an end portion of said tubular body so as to strengthen said end portion, and being characterized in that it comprises a cylindrical hollow shaft, capable of engaging said end portion, and retention means so as to cause said hollow shaft to constantly engage said end portion.

Preferably, the strengthening member as defined hereinabove, further comprises a cylindrical head, rigidly connected with one end of said shaft and coaxial to it; the outer diameter of said head being substantially equal to an outer diameter of said end portion, said head being capable of abutting against a front end surface of said end portion; conveniently, said head being provided with a rounded edge, opposite to that adjacent to the shaft.

The present invention will be better described by way of a non-limiting example, with reference to the accompanying drawings, in which:
Fig. 1 shows a partial sectional view of a preferred embodiment of the strengthening member as according to the present invention, uncoupled from a relevant deformable pipe; and
Figs. 2 and 3 show a partial view of a coupling for joining pipe and of a deformable pipe, fitted with said strengthening member and shown in an ingress position and in a copuling position, respectively, with respect to said joint.

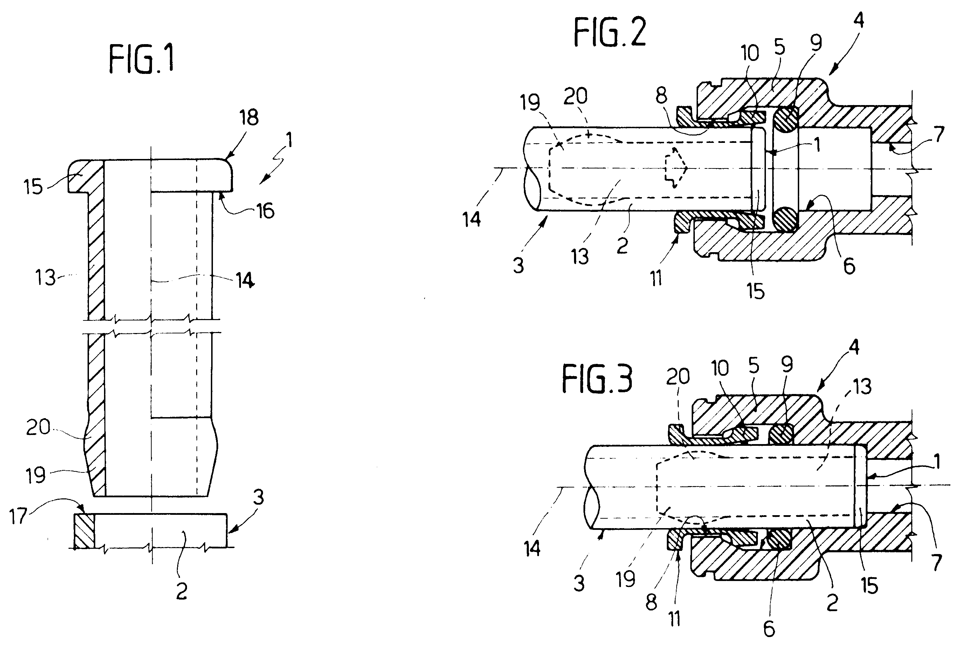

With reference to Fig. 1, there is indicated with 1 a strengthening member for an end portion 2 of a deformable pipe 3, made of plastic material, and capable of being joined in a sealed manner to another pipe (not shown in the drawing) by means of a Victaulic coupling of the known type and indicated with 4 (Figs. 2 and 3).

In particular, coupling 4 comprises a tubular body 5, defining, at opposite ends, two chambers 6 (only one thereof being shown in Figs. 2 and 3), communicating with each other through a passage 7, and outward through their respective openings 8. Within each chamber 6 there is housed, through its respective opening 8, a seal ring 9, made of elastomeric material and fitted, in operation, over portion 2 (Fig. 3), and an end portion 10 of a known retention member 11, extending through its relevant opening 8 and surrounding, in operation, pipe 3, thus exercising on portion 2 a radial compression in response to a stress applied in an axial direction and tending to uncouple said pipe 3 from relevant seal ring 9.

Still with reference to the accompanying drawings and, in particular, to Fig. 1, member 1 comprises a cylindrical hollow shaft 13, having an axis 14 and whose outer diameter is smaller than the inner diameter of portion 2, and extending, in operation, inside said portion 2. Shaft 13 carries a cylindrical head 15, rigidly connected with an end portion, and whose outer diameter is substantially equal to the outer diameter of pipe 3, the side of said head facing shaft 13 being delimited by an annular surface 16, capable of abutting against a front end surface 17 of portion 2, and having a rounded edge 18, opposite to that adjacent to shaft 13.

Shaft 13 further comprises an end portion 19, opposite to that connected with head 15, tapered towards the free end of shaft 13, placed alongside and radiused with a ridge 20, extending circumferentially from an outer side surface of said shaft 13, and cooperating, in operation, in a frictional manner with an inner side surface of portion 2, to cause surfaces 16 and 17 to be constantly kept into contact with each other.

According to the foregoing, member 1 clearly allows for pipe 3 and coupling 4 to be connected in an utterly reliable manner, irrespectively of the operating conditions. Indeed, while the task of ridge 20 is simply that of preventing any relative displacement between member 1 and pipe 3, shaft 13 causes portion 2 to be stiffened from within, said portion 2 being therefore able of reacting to any radial stress applied by retention member 11 without being deformed and, consequently, without affecting seal by ring 9.

Furthermore, besides providing for a shoulder for portion 2, thanks to its rounded edge 18, head 15 allows for pipe 3 to be joined to coupling 4 without affecting the functionality of ring 9. Indeed, rounded edge 18 allows for portion 2 of pipe 3 to be gradually inserted into ring 9 without causing any damage whatsoever to the side surface of said ring 9.

The hereinabove described member 1 may, of course, be altered, improved and added onto in such a way, though, as not to exceed the scope of protection of the present invention. In particular, the position of ridge 20, with respect to head 15, may be changed, and there may be provided for more ridges, either adjacent to or spaced from said ridge 20. Furthermore, there may not be provided for portion 19 of shaft 13 and the latter may simply be fitted with a chamfered or rounded edge, such as to facilitate insertion of shaft 13 into portion 2.

## Claims

1. A strengthening member (1) for a deformable tubular body (3); member (1) being capable of cooperating with an end portion (2) of said tubular body (3) to reinforce said end portion (2), and characterized in that it comprises a cylindrical hollow shaft (13), capable of engaging said end portion (2), and retention means (20), to allow for hollow shaft (13) to be constantly engaged with end portion (2).

2. An member as claimed in Claim 1, characterized in that the outer diameter of said shaft (13) is smaller than the inner diameter of said end portion (2).

3. An member as claimed in either Claim 1 or 2, characterized in that it further comprises a cylindrical head (15), rigidly connected with one end of said shaft (13) and coaxial to it; the outer diameter of head (15) being substantially equal to an outer diameter of said end portion (2), and said head (15) being capable of abutting against a front end surface (17) of said end portion (2).

4. An member as claimed in Claim 3, characterized in that said head (15) has a rounded edge (18), opposite to that adjacent to shaft (13).

5. An member as claimed in either Claim 3 or 4, characterized in that said retention means comprise at least one projection (20), carried by said shaft (13), and capable of cooperating in a frictional manner with an inner surface of said end portion (2).

6. An member as claimed in Claim 5, characterized in that said projection is defined by a ridge (20), extending circumferentially and rigidly connected with an outer surface of said shaft (13).

7. An member as claimed in any one of the above Claims from 3 to 6, characterized in that said shaft (13) comprises an end portion (19), opposite to that adjacent to head (15) and tapered towards a free end of said shaft (13).

8. An member as claimed in both Claims 6 and 7, characterized in that said ridge (20) and said tapered end portion (19) extend alongside each other and are radiused.
